## Europäisches Patentamt

## European Patent Office

## Office européen des brevets

(11) Publication number: **0 139 538**
**B1**

(12) **EUROPEAN PATENT SPECIFICATION**

(45) Date of publication of patent specification: **09.09.87**

(21) Application number: **84307274.5**

(22) Date of filing: **23.10.84**

(51) Int. Cl.⁴: **B 41 J 9/26, G 06 K 13/02**

(54) Control signal generating circuit.

(30) Priority: **27.10.83 US 546129**

(43) Date of publication of application:
**02.05.85 Bulletin 85/18**

(45) Publication of the grant of the patent:
**09.09.87 Bulletin 87/37**

(84) Designated Contracting States:
**DE FR GB**

(56) References cited:
**EP-A-0 083 694**
**US-A-3 659 524**
**US-A-3 908 542**
**US-A-4 180 334**

**IBM TECHNICAL DISCLOSURE BULLETIN, vol.
17, no. 7, December 1974, pages 1918-1920,
New York, US; R.E. PILKINGTON: "Frequency
monitoring circuit"**

(73) Proprietor: **NCR CANADA LTD - NCR CANADA
LTEE
6865 Century Avenue
Mississauga Ontario, L5N 2E2 (CA)**

(72) Inventor: **Mazumder, Ali Tazammul
357 Grange Wood Drive
Waterloo Ontario N2K 2E4 (CA)**

(74) Representative: **Robinson, Robert George
International Patent Department NCR Limited
206 Marylebone Road
London NW1 6LY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to control signal generating circuits of the kind generating control signals at times dependent on variable time intervals defined between respective start and stop signals.

The invention has a particular application where the control signal is adapted to control the firing of a print hammer in a printer. One pertinent field of use for printers is in encoding characters on checks, deposit slips and other documents used in the banking business.

When specific styles of fonts such as E13B, OCR-A, CMC7, and OCR-B, for example, are printed on documents like bank checks and deposit slips, it is necessary that the printing be carried out with extreme accuracy in order to meet stringent requirements. These requirements are necessary to ensure that when the data printed is ready subsequently by reading devices, it is read properly. A poorly or inaccurately printer character will not be read accurately.

The E13B font, for example, is a style of printing which is used by the banks in the USA and other countries for printing on checks and other financial documents. This font is printed with a magnetic ink, and the data printed thereby is generally referred to as MICR (magnetic ink character recognition) data.

A convenient way of printing MICR data in an E13B font is to utilize mechanical impact printing. The mechanical printing generally produces accurate, correctly-readable data. One of the ways of printing mechanically is to utilize a hammer which impacts against a typeface which has the character to be printed formed thereon.

Such mechanical printing is utilized, for example, in an encoder which prints MICR data on financial documents such as checks or deposit slips. Generally, a document to be printed upon is moved along a document track in the encoder to a print station therein where a transport drive roller is used to move the document at a constant velocity in the track during printing. The drive roller is rotated by a motor whose speed is monitored, for example, by a shaft encoder using a timing disc and associated circuitry. By using the rotational speed of the motor as a measure of the document's velocity at the print station, a hammer at the print station can be energized in synchronization with the document's velocity so as to provide constant spacing between the characters printed. This is generally true for printing at low speeds.

When the printing technique described in the previous paragraph is attempted at high speeds, irregular spacings between characters tend to occur. Because the document velocity at the print station is high when high printing speeds are attempted compared to the low speeds mentioned, any variation in document velocity at the high printing speeds will cause noticeable spacing irregularities. This is true because the hammer flight time, from energization to impact, for a particular hammer is constant, and at high printing speeds, the variation in velocity of a document at the print station has a greater effect on the associated total print cycle than it does at the slow printing speeds.

According to the present invention, there is provided a control signal generating circuit for generating control signals at times dependent on variable time intervals defined between respective start and stop signals, characterized by: time duration means responsive to each signal to develop a first time period corresponding to a predetermined shortest time period for said variable time intervals; time measuring means adapted to measure a second time period commencing with the termination of each first period and terminating with the associated stop signal; and control signal providing means adapted to develop a third time period commencing with the termination of each second time period and of a duration having a predetermined relationship to the associated second time period, and to provide a control signal at the termination of each third time period.

A control signal generating circuit according to the invention has the advantages of being simple, inexpensive, and easy·to incorporate in a business machine such as an encoder which prints on financial documents such as checks and deposit slips.

In the embodiment described hereinafter, wherein a control signal generating circuit according to the invention is utilized in a printer environment having a hammer which is fired to impact against a typewheel, for example, the hammer firing is synchronized to the instantaneous speed of a moving document which is to be printed upon.

One embodiment of the invention will now be described by way of example with reference to the accompanying drawings, in which:-

Fig. 1 is a plan view, in diagrammatic form, of an environment such as an encoder which includes a printer module in which the control signal generating circuit of this invention may be used;

Fig. 2 is a plan view of a document, such as a check, which may be printed upon by the printer module shown in Fig. 1;

Fig. 3 is an elevational sectional view, taken along the line 3—3 of Fig. 1 to show, in diagrammatic form, additional details of the printer module;

Fig. 4 shows the output of the shaft encoder shown in Fig. 1;

Fig. 5 shows the pulse to fire or actuate the hammer shown in Fig. 1;

Fig. 6 is a schematic diagram showing the hammer motion from firing to impact; and

Fig. 7 is a schematic diagram showing more details of the character spacing circuit shown in Fig. 1.

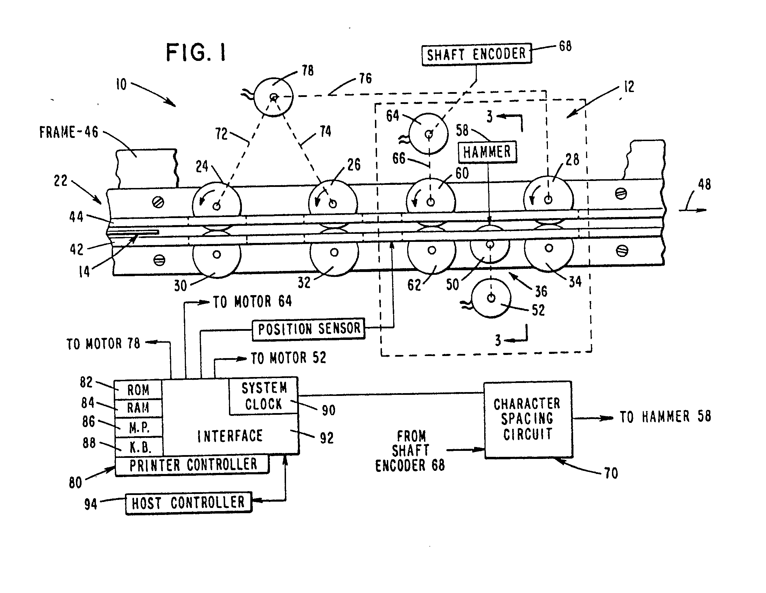

Fig. 1 is a plan view, in diagrammatic form, of an environment such as an encoder 10 which includes a printer module (shown in dashed rectangle 12) with which the character spacing circuit of this invention may be used.

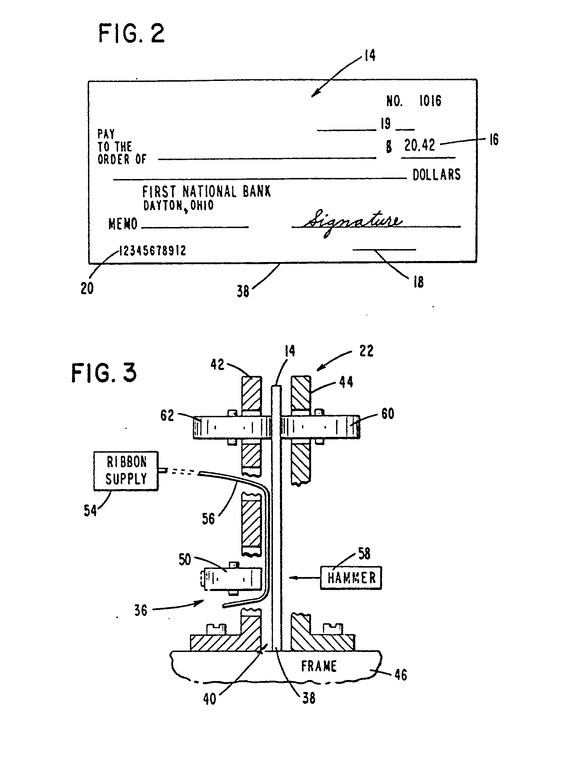

As general background information, the encoder 10 is a business machine which is used in the banking industry to process documents such as deposit slips and checks, for example, like check 14 shown in Fig. 2. During the processing of checks at a bank, for example, a point is reached at which the monetary or courtesy amount 16 of the check is printed on the check itself. Generally, the courtesy amount 16 is printed under the signature along the line 18 thereon. In the USA and a number of other countries, the checks have magnetic ink character recognition (MICR) data printed thereon according to an E13B font, for example. This MICR data 20 (shown only in plain printing in Fig. 2) on the check 14 includes, for example, the account number, check number, and bank number. In the embodiment described, the printer module 12 is utilized to print the courtesy amount 16 along line 18 of documents like check 14 in MICR ink and in a stylized font like E13B, for example. On certain documents like blank deposits slips (not shown), the MICR data 20 may also be printed thereon by the printer module 12.

The printer module 12 is shown within a dashed rectangle in Fig. 1 so as to orient it in relation to the encoder 10. The encoder 10 includes a document track 22 and transport rollers such as 24, 26, and 28 which co-operate with associated pinch rollers 30, 32, and 34 respectively, to provide a means for moving a document like check 14 to a print station 36 in the encoder 10. The top edge of the check 14 is seen in Fig. 1, and it is fed on its lower edge 38 (Fig. 3), with the lower edge 38 gliding over the trough portion 40 of track 22 which also includes the vertical side walls 42 and 44. These side walls 42 and 44 are secured to the frame 46 (shown diagrammatically) and are spaced apart to receive the documents therebetween and to guide a document like check 14 to the print station 36 where the printing module 12 is located. The printing module 12 is then utilized to print the courtesy amount 16 on the associated check 14 is moved from the print station 36 by drive roller 28 and its associated pinch roller 34 and moved in the downstream direction shown by arrow 48 to other elements not important to an understanding of this invention.

The print module 12 (Fig. 1) is shown in more detail in Fig. 3, with a portion of the document track 22 being shown to orient the reader. The printer module 12 may be any of the conventional impact printers which employs at least one hammer or actuator to effect mechanical printing. For example, in the embodiment described, the printer module 12 includes a typewheel 50 having characters position around the periphery thereof, and the typewheel 50 is indexed or rotated by a drive motor 52 (Fig. 1) to present the necessary character for printing. A conventional means for supplying ribbon called ribbon supply 54 (shown only diagrammatically in Fig. 3) is used to present fresh ribbon 56 to the print station 36. When the desired character to be printed is positioned at the print station 36, the hammer 58 impacts against the check 14, ribbon 56 and typewheel 50 to form the selected character on the print line 18 of the check 14 in the example described. The check 14 is moved at a controlled rate of speed at the print station 36 by a drive roller 60 and its associated pinch roller 62. The drive roller 60 is rotated at a constant velocity by the motor 64 (Fig. 1) and is connected thereto by a conventional timing belt, for example, which is shown as dashed line 66. The transport rollers 24, 26, and 28 are considered "soft drive" rollers whereas the drive roller 60 is considered a "hard drive" roller; stated another way, the coefficient of friction of drive roller 60 is much greater than that of the transport rollers 24, 26, and 28 to enable the drive roller 60 to control the velocity of a document at the print station 36.

The velocity of a document at the print station 36 (Fig. 1) is determined by monitoring the rotational velocity of the motor 64. This monitoring is effected by a conventional shaft encoder 68 which is coupled to the output shaft of motor 64. The shaft encoder 68 includes the usual slotted disc secured to the motor shaft, a light cell and photocell combination positioned in operative relationship with the slotted disc, and associated processing circuitry (not shown). The output of the shaft encoder 68 is a series of signals with one such signal being provided for each revolution of the motor 64. The output of the shaft encoder 68 is fed into the character spacing circuit designated generally as 70, which will be hereinafter as CS circuit 70. However, before discussing the details of CS circuit 70, it appears appropriate to discuss some additional details about the encoder 10 and printer module 12.

The transport roller 24, 26, and 28 (Fig. 1) of the encoder 10 are rotated at a constant velocity by suitable belt drives shown as dashed lines 72, 74, and 76, respectively, which belt drives are driven by the motor 78 to move the document 14 along the track 22 as previously explained.

The printer module 12 has a conventional printer controller 80 which includes: a read only memory (ROM) 82 in which instructions may be stored, a random access memory (RAM) 84 in which instructions may be loaded daily from a supplemental storage (not shown), a processor (MP) 86 for executing the instructions, a keyboard (KB) 88 for entering data, a system clock 90, and interface circuitry 92 for interconnecting the various components mentioned. The printer controller 80 may also be coupled to a host controller 94 which, for example, may be part of the encoder 10.

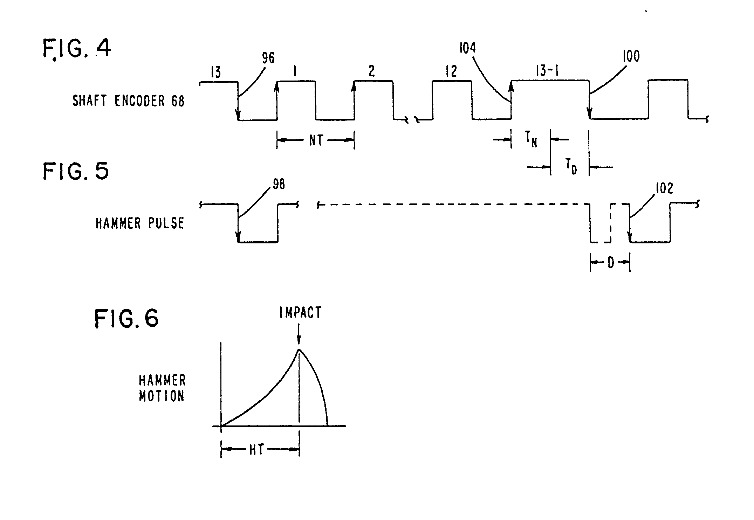

The output of the shaft encoder 68 (Fig. 1) is shown in Fig. 4. In the embodiment described, the hammer 58 is fired to print a character in association with the typewheel 50 at every thirteen pulses from the shaft encoder 68, although naturally, this number could be changed for different applications. The nominal time (NT) between adjacent pulses such as 1 and 2 in Fig. 4 when the motor 64 is running at a nominal, constant velocity is one millisecond. At the fall of the thirteenth pulse, as shown by line 96 (Fig. 4), the hammer 58 is fired; in the embodiment described, the hammer firing pulse is negative-going, as shown by line 98 in Fig. 5. The hammer time, from the time the hammer 58 is actuated until it impacts against the typewheel 50, is constant for an individual hammer 58 and is shown as HT in Fig. 6. While the hammer time is constant for an individual hammer, the constants for a plurality of hammers may vary from about 2.6 to 3.0 milliseconds in the embodiment described. Note that in Fig. 1, only one hammer 58 is used in the printer module 12, and when selected, the hammer 58 has a constant HT. Assuming that the constant HT for a hammer 58 is three milliseconds, it means that three pulses from the shaft encoder 68 (Fig. 4) will occur between the time from line 98 of Fig. 5 (i.e. the hammer firing pulse) and the time of impact as shown in Fig. 6 which is not shown in the same time scale as Fig. 5.

The pulses marked 13, 1, 2, and 12 in Fig. 4 are pulses (from the shaft encoder 68) having nominal times (NT) when the motor 64 is running at its constant, nominal velocity. Under such circumstances even character spacing would result as earlier described herein. The width of pulse 13—1 is made about twice as long in time as the nominal time NT to represent a situation in which the motor 64 is running slower than nominal which in turn would produce adjacent characters with closer than normal inter-character spacing. In this regard, pulse 13—1 is made up of a nominal time $(T_N)$ and a delay time $(T_D)$, with $T_N$ being equal in time to the time expressed as the width of pulses 1 and 2 in Fig. 4, for example.

Note that without this invention, the fall of pulse 13—1, as shown by line 100 in Fig. 4, would be used to fire the hammer 58, and close inter-character spacing would result. However, with the CS circuit 70, a delay in firing hammer 58 is introduced, resulting in more even inter-character spacing. This delay marked D in Fig. 4 is substantially equal to the delay time $(T_D)$ due to the motor 64 running slower than the nominal speed, and the hammer is fired at a time represented by line 102 instead of being fired at a time represented by line 100. This delay is introduced by CS circuit 70 (Fig. 1) as will be described hereinafter.

It should be noted that the printer module 12 and its associated CS circuit 70 (Fig. 1) are designed so that any correction with regard to adjusting the firing of hammer 58 is done so as to introduce a delay D (Fig. 5) which is dependent upon the delay $T_D$ (Fig. 4). Another point is that the examination of the velocity of a document 14 being fed at the printer module 12 is performed "instantaneously" in the sense that the correction to firing the hammer 58 is ascertained by an evaluation of the thirteenth pulse from the shaft encoder 68; in the example described, this means the time represented by the width of pulse 13—1 shown in Fig. 4.

Some additional points need clarification prior to describing the CS circuit 70 (Fig. 1) in more detail. In the embodiment described, the transport rollers 24, 26, and 28 move the documents like check 14 along the track 22 at a velocity of about 345 centimetres per second. When the check 14 reaches the printer module 12, the drive roller 60 therein controls the speed of the check 14 at a speed of about 25.4 centimetres per second during printing at the module 12. This printing speed of 25.4 centimetres per second at print module 12 compares with general speeds of about 6.3 centimetres per second in prior art systems.

As far as prior arts systems are concerned, the inter-character spacing was determined generally by simply counting the revolutions of the motor which was moving the document in printing relationship with the associated printer. For example, the hammer associated with the printer might be "fired" or actuated every five revolutions of the motor moving the document in printing relationship with the printer. At nominal printing speeds of the 6.3 centimetres per second mentioned, there is generally no problem with inter-character spacing. However, at speeds of 25.4 centimetres per second during printing, variations in the speed of the motor moving the document in printing relationship with the printer become a problem with regard to inter-character spacing for the reasons mentioned earlier herein. As an example, if the speed of the motor moving the document during printing is slower than nominal, the resulting printed characters may be crammed together with little or no inter-character spacing, causing a distortion or error in reading when the characters are read subsequently.

A feature of the present embodiment is that the hammer firing is adjusted at the moment that firing the hammer is scheduled. Applying this to the specific embodiment disclosed, it means that the hammer 58 is scheduled to be fired every 13 revolutions of motor 64 or every 13 pulses from the shaft encoder 68. At the 13th pulse, the velocity of motor 64 is "examined" to determine its velocity with regard to the anticipated speed, and if an adjustment in the time when the hammer 58 is to be fired is necessary, the adjustment is made by delaying or extending the point in time in which the hammer is fired from the start of the 13th pulse from the shaft encoder 68. In other words, the CS circuit 70 is designed for the fastest speed anticipated from the motor 64, and any corrections to firing the hammer 58 are such as to delay the firing from this fastest speed. In other words, the corrections or adjustments are unidirectional in that they always delay the firing of the hammer 58 by varying amounts of time.

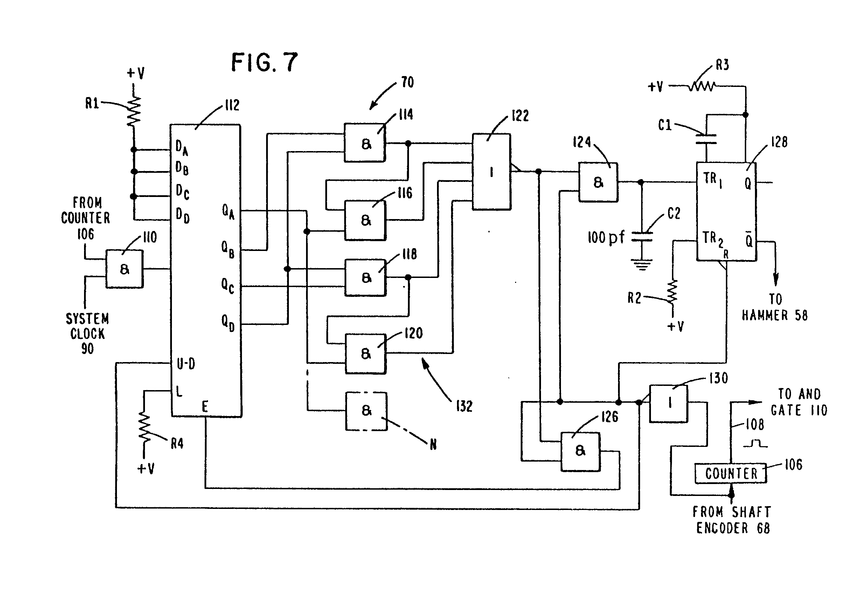

As previously stated, the evaluation of the speed of the document or check 14 at the printer module 12 occurs at every 13th pulse from the shaft encoder 68. This evaluation is initiated on the rise of the 13th pulse as shown by line 104 (start signal) in Fig. 4. A conventional counter circuit 106 (Fig. 7) receives the pulses from the shaft encoder 68 and provides a positive-going output on line 108 when the 13th pulse (104) is received. The counter circuit 106 does not have to be a part of the CS circuit 70, shown in more detail in Fig. 7, although the circuit 106 is shown here merely for convenience.

The CS circuit 70 (Fig. 7) includes an AND gate 110; an up/down counter 112, such as circuit #74191 which is available from Fairchild Corporation, for example; a series of AND gates 114, 116, 118, 120; a NOR gate 122; AND gates 124 and 126; a one-shot timer 128, such as circuit #9602 which is available from Fairchild Corporation, for example; an inverter 130; and various other resistors and capacitors (to be later defined herein) which are all interconnected as shown in Fig. 7.

Stated generally, one of the functions of the up/down counter 112 (Fig. 7) is to start upcounting clock pulses from the systems clock 90 (Fig. 1) on the rise of a clock pulse and on the rise of the 13th pulse (line 104 in Fig. 4) from the shaft encoder 68. Another function of the up/down counter 112 is to start downcounting clock pulses on the fall (stop signal at line 100 in Fig. 4) of the 13th pulse from the shaft encoder 68. The counter 112 is set to a predetermined value so that it produces a counting output only when the count exceeds the predetermined value. The count by which the predetermined value is exceeded provides a measure of the delay to be introduced in the firing of hammer 58.

The general explanation given in the preceding paragraph can be more readily understood in connection with a more detailed explanation of the CS circuit 70 (shown in Fig. 7). In the embodiment described, the present value which is set upon the counter 112 is nine. In this regard, the appropriate terminals $D_A$, $D_B$, $D_C$ and $D_D$ can be connected through resistor R1 to a source of potential +V as is customarily done. With a preset value of nine on counter 112, its outputs $Q_A$, $Q_B$, $Q_C$ and $Q_D$ will be at a low level until the count registered on the counter 112 reaches 10 (upcounting from zero) and with a count of ten thereon, the $Q_B$ and $Q_D$ outputs will rise to the high level. With respect to binary counts, the outputs $Q_A$, $Q_B$, $Q_C$ and $Q_D$ represents binary 1, 2, 4, and 8, respectively. The pulses which are counted upon the counter 112, when it is conditioned to count, are pulses from the system clock 90. In the embodiment described, the frequency of the system clock 90 is 600 Hz although the frequency of the clock 90 could be increased if finer resolution is necessary or required. The counter 112 is conditioned to count by placing a low level signal on its terminal E. The level of the signal on terminal E is determined by the output of the AND gate 126. It should be understood that the output of counter 106 on line 108 goes to the high level on the rise (line 104 in Fig. 4) of the 13th pulse from the shaft encoder 68 and falls to the low level on the rise of the next pulse from the shaft encoder 68. The high level signal from counter 106 is fed to the AND gate 110 to condition it so that counting of the pulses from the system clock 90 occurs on the positive-going side of the next such pulse. The pulses from the system clock 90 are then counted in an upcounting mode by the counter 112.

As the upcounting on counter 112 progresses, the outputs therefrom remain at the low level until the predetermined count (nine in the embodiment described) is reached. When a count of ten is reached on counter 112, the $Q_B$ (a two) and the $Q_D$ (an eight) outputs will rise to the high level. The $Q_B$ and $Q_D$ outputs from counter 112 are fed into AND gate 114 whose output switches to a high level when a count of ten is reached at counter 112. The high level from AND gate 114 causes the output of NOR gate 122 to switch from a high level (when all its inputs are at a low level) to a low level (when any one of its inputs is at a high level).

The AND gates 114, 116, 118, and 120 (Fig. 7) are coupled conventionally in a matrix 132 which provides an output on one of these gates for a count of ten through thirteen, respectively. For example, the $Q_C$ (a four) and $Q_D$ (an eight) outputs of counter 112 are coupled to AND gate 118 to provide a high level output when the count on counter 112 reaches twelve. Additional AND gates like N (shown in dashed outline in Fig. 7) may be added and coupled conventionally to obtain counts above a count of thirteen which AND gate 120 provides. The output of the AND gates 114, 116, 118, 120, and N are fed into the NOR gate 122. The low-level output signal of the inverter circuit 103 is fed into the U—D terminal of the counter 112 to place it in the upcounting mode being discussed; correspondingly, a high level signal fed into terminal U—D places counter 112 into a downcounting mode.

Assume, in the example being described, that the count on counter 112 reaches twelve, and at this instant, the output of 13—1 in Fig. 4 falls to a low level as at line 100. This falling level at line 100 from the shaft encoder 68 causes the output of the inverter 130 to change to a high level, which, in turn, puts the counter 112 (via input U—D) in a downcounting mode. Once the counter 112 is triggered into the down-counting mode in the example described, the first count reached is eleven, and thereafter count ten is reached. As soon as a downcount of nine is reached on counter 112, the outputs of AND gates 114-120 fall to a low level. With each of the inputs to NOR gate 122 being at a low level, the gate 122 produces an output control signal which rises to a high level. A high level output from NOR gate 122 and the present high level from inverter 130 cause the output from AND gate 124 to rise to a high level. The transition from low to high level from AND gate 124, fed into terminal $TR_1$ of one-shot timer 128, will trigger the timer 128. The timer 128 is one which responds only when the reset terminal R thereof is at a high level. The reset terminal R is connected to the output of the inverter and is therefore at this high level during the downcounting of counter 112. The other trigger terminal $TR_2$ of timer 128 is not used; therefore, it is tied to a voltage +V via a resistor R2. The capacitor C—1 and resister R3 are selected, conventionally, to provide the appropriate delay to fire the hammer 58. The $\bar{Q}$ output (a negative-going pulse) is used to fire the hammer 58 in the specific embodiment described; the negative-going pulse shown on line 102 in Fig. 5.

To recapitulate in summary, the counter 112 is conditioned to count (in either direction) on the rise of a pulse from the shaft encoder 68. This is brought about by the output from the inverter 130 (a low-level to AND gate 126) changing the output of AND gate 126 to a low level. A low level the E terminal of the counter 112 conditions it. When the rise of the 13th pulse (line 104 in Fig. 4) is detected by the counter circuit 106, the system clock pulses pass through the AND gate 110 to the counter 112. This same rise in the 13th pulse places the counter 112 in an up-counting mode by placing a low level signal to the U—D terminal thereof. From counts of 0 to 9, the output of the NOR gate 122 is at a high level. For counts between 10 and 13, the output of the NOR gate 122 changes to a low level to keep the output of the AND gate 26 at the low level thereby maintaining the counter 112 conditioned to count. At the fall of the 13th pulse shown by the line 100 in Fig. 4 (from the shaft encoder 68 in Fig. 7), this fall or low level is inverted by the inverter 130 to change one input to the AND gate 126 to a high level but the other input thereto from the NOR gate 122 is at a low level to keep the counter 112 conditioned to count. The fall of the 13th pulse (line 100 in Fig. 4) from the shaft encoder 68 conditions the counter 112 via the inverter 130 to start down-counting by placing a high level signal on the U—D terminal thereof. The output of the counter 106 is still at a high level since the rise of the next pulse in Fig. 4 has not occurred as yet. Therefore, system clock pulses pass through the AND gate 110 for the downcounting mode. When the counter 112 downcounts to 9, the output of the NOR gate 122 switches to a high level to produce a high level at the output of the AND gate 126 to disable the counter 112. The counter 112 in a practical embodiment may be a Fairchild No. 74191 which upcounts in response to a low level signal to the U—D terminal thereof.

The time delay associated with the timer 128 (Fig. 7) is two milliseconds in the embodiment described; the delay is provided just to provide the necessary operating time for specific hammer 58 selected. Hammer 58, in embodiment described, is one which is used in the NCR C775 Proof Encoder machine, for example, which encoder is manufactured by NCR Corporation. The 100pf capacitor C2 is in the circuit 70 for the purpose of eliminating noise spikes. The L terminal of the counter 112 is tied to a voltage of +5 volts through a resistor R4 as is conventionally done to enable the counter 112 to upcount and downcount.

Notice that in the embodiment described, a delay (due to a change in the speed of motor 64) is introduced into the firing of the hammer 58 only when the count on counter 112 exceeds a predetermined amount which is nine. This predetermined amount of nine, for example, represents the fastest speed anticipated for a document (check 14) to travel at the print station 36. In the example described, the upcount on counter 112 (above nine) was 10, 11, 12, and 13 (for four clock pulses); this provides a measure of the delay required. After the fall of the 13th pulse (line 100 in Fig. 4) the CS circuit 70 puts the counter 112 into a downcounting mode (for four clock pulses) by downcounting 12, 11, 10, and 9; this downcounting for four clock pulses is the delay introduced to compensate for variations in the speed of motor 64 which drives or moves the check 14 at the print station 36.

**Claims**

1. A control signal generating circuit for generating control signals at times dependent on variable time intervals defined between respective start (104) and stop (100) signals, characterized by: time duration means (112, R1) responsive to each start signal (104) to develop a first time period corresponding to a predetermined shortest time period for said variable time intervals; time measuring means (112, 126, 130) adapted to measure a second time period commencing with the termination of each first time period and terminating with the associated stop signal (100); and control signal providing means (112-124) adapted to develop a third time period commencing with the termination of each second time period and of a duration having a predetermined relationship to the associated second time period, and to provide a control signal at the termination of each third time period.

2. A circuit according to claim 1, characterized in that said predetermined relationship is equality.

3. A circuit according to claim 1 or 2, characterized in that said time duration means includes an up/down counter (112) which is conditioned to commence counting clock signals upon the occurrence or said start signal (104) in an up-counting mode, to produce no count output signal while counting to a predetermined count corresponding to said predetermined shortest time period, and to produce a count output signal thereafter.

4. A circuit according to claim 3, characterized in that said time measuring means includes said counter (112) which is adapted to continue counting said clock signals in said up-counting mode until the occurrence of said stop signal (100) and to thereafter count said clock signals in a downcounting mode.

5. A circuit according to claim 4, characterized in that said control signal providing means includes logic means (114-122) coupled to count outputs of said counter (112) and adapted to produce a first level logic signal while the count in said counter (112) does not exceed said predetermined count and a second level logic signal while the count in said counter (112) exceeds said predetermined count.

6. A circuit according to claim 5, characterized by a logic gate (124) having an input coupled to said logic means (114-122) and adapted to produce said control signal in response to said second level logic signal changing to said first level logic signal.

7. A circuit according to any one of the preceding claims, characterized in that said start (104) and stop (100) signals are generated in response to the movement of transport means (60, 62, 64) adapted to move a document to a control printer (12) and in that said control signal is effective to control the actuation of a print hammer (58) in said printer (12), whereby said characters are printed with substantially constant intercharacter spacing.

**Patentansprüche**

1. Steuersignalzeugungsschaltung zum Erzeugen von Steuersignalen zu Zeitpunkten, abhängig von variablen Zeitintervallen, die zwischen entsprechenden Start- (104) und Stopp- (100) -signalen definiert werden, gekennzeichnet durch: Zeitdauervorrichtungen (112, R1), die auf jedes Startsignal (104) ansprechen, um eine erste Zeitperiode entsprechend einer vorbestimmten kürzesten Zeitperiode für die genannten variablen Zeitintervalle zu entwickeln; Zeitmeßvorrichtungen (112, 126, 130), die geeignet sind, eine zweite Zeitperiode, beginnend mit der Beendigung jeder ersten Zeitperiode und endend mit dem zugeordneten Stoppsignal (100) zu messen; und Steuersignalabgabevorrichtungen (112-124), die geeignet sind, eine dritte Zeitperiode, beginnend mit der Beendigung jeder zweiten Zeitperiode und mit einer Dauer zu entwickeln, die eine vorbestimmte Beziehung zu der zugeordneten zweiten Zeitperiode hat, und um ein Steuersignal bei Beendigung jeder dritten Zeitperiode abzugeben.

2. Schaltung nach Anspruch 1, dadurch gekennzeichnet, daß die vorbestimmte Beziehung Gleichheit ist.

3. Schaltung nach Anspruch 1, oder Anspruch 2, dadurch gekennzeichnet, daß die Zeitdauervorrichtungen einen Auf/Abzähler (112) aufweisen, der derart eingestellt ist, daß er Taktsignale bei Auftreten des Startsignals (104) in einer Aufwärtszählbetriebsart zu zählen beginnt, um ein Zählausgangssignal abzugeben, während er bis zu einer vorbestimmten Zählung zählt, die der vorbestimmten kürzesten Zeitperiode entspricht, und ein Zählausgangssignal danach abzugeben.

4. Schaltung nach Anspruch 3, dadurch gekennzeichnet, daß die Zeitmeßvorrichtungen den genannten Zähler (112) aufweisen, der geeignet ist, die Zählung der Taktsignale in der Aufwärtszählbetriebsart fortzusetzen, bis das Stoppsignal (100) auftritt und hiernach die Taktsignale in einer Abwärtszählbetriebsart zu zählen.

5. Schaltung nach Anspruch 4, dadurch gekennzeichnet, daß die das Steuersignal abgebenden Vorrichtungen logische Vorrichtungen (114-122) aufweisen, die mit den Zählausgängen des Zählers (112) verbunden und geeignet sind, ein erstes logisches Pegelsignal abzugeben, während die Zählung in dem genannten Zähler (112) die vorbestimmte Zählung nicht überschreitet und ein zweites logisches Pegelsignal, während die Zählung in dem Zähler (112) die vorbestimmte Zählung überschreitet.

6. Schaltung nach Anspruch 5, gekennzeichnet dadurch ein logisches Tor (124) mit einem Eingang, der mit den logischen Vorrichtungen (114-122) gekoppelt und geeignet ist, das Steuersignal unter Ansprechen darauf zu erzeugen, daß sich das zweite logische Pegelsignal in das erste logische Pegelsignal ändert.

7. Schaltung nach einem der vorhergehenden Ansprüche, dadurch gekennzeichnet, daß das Start- (104) und Stopp- (100) -signal unter Ansprechen auf die Bewegung von Transportvorrichtungen (60, 62, 64) erzeugt werden, die geeignet sind, einen Beleg zu einem Zeichendrucker (12) zu bewegen und daß das Steuersignal wirksam ist, um die Betätigung eines Druckhammers (58) in dem Drucker (12) zu steuern, wodurch Zeichen mit im wesentlichem konstanten Zwischenzeichenabstand gedruckt werden.

**Revendications**

1. Circuit de génération de signaux de commande destiné à générer des signaux de commande à des instants dépendant d'intervalles de temps variables définis entre des signaux respectifs de départ (104) et d'arrêt (100), caractérisé par: des moyens (112, R1) de durée dans le temps qui, en réponse à chaque signal de départ (104), développent une première période de temps correspondant à une période de temps prédéterminée la plus courte pour lesdits intervalles de temps; des moyens (112, 126, 130) de mesure de temps conçus pour mesurer une deuxième période de temps commençant avec la fin de chaque première période de temps et se terminant avec le signal d'arrêt associé (100); et des moyens (112-124) produisant un signal de commande conçus pour développer une troisième période de temps commençant avec l'achèvement de chaque deuxième période de temps et d'une durée ayant une relation prédéterminée avec la deuxième période de temps associée, et pour produire un signal de commande à la fin de chaque troisième période de temps.

2. Circuit selon la revendication 1, caractérisé en ce que ladite relation prédéterminée est une égalité.

3. Circuit selon la revendication 1 ou la revendication 2, caractérisé en ce que lesdits moyen de durée dans le temps comprennent un compteur/décompteur (112) qui est conditionné de façon à commencer un comptage de signaux d'horloge à l'apparition dudit signal de départ (104) dans un mode de comptage, afin de ne pas produire de signal de sortie de compte pendant un comptage jusqu'à un compte prédéterminée correspondant à ladite période de temps prédéterminée la plus courte, et de produire un signal de sortie de compte ensuite.

4. Circuit selon la revendication 3, caractérisé en ce que lesdits moyens de mesure de temps comprennent ledit compteur (112) qui est conçu pour continuer le comptage desdits signaux d'horloge dans ledit mode de comptage jusqu'à l'apparition du signal d'arrêt (100) et pour compter ensuite lesdits signaux d'horloge dans un mode de décomptage.

5. Circuit selon la revendication 4, caractérisé en ce que lesdits moyens produisant un signal de commande comprennent des moyens (114-122) couplés aux sorties de compte dudit compteur (112) et conçus pour produire un signal logique d'un premier niveau alors que le compte dans ledit compteur (112) ne dépasse pas ledit compte prédéterminé, et un signal logique d'un second niveau alors que le compte dans ledit compteur (112) dépasse ledit compte prédéterminé.

6. Circuit selon la revendication 5, caractérisé par une porte logique (124) ayant une entrée couplée aux moyens logiques (114-122) et conçue pour produire ledit signal de commande en réponse au passage dudit signal logique du second niveau audit signal logique du premier niveau.

7. Circuit selon l'une quelconque des revendications précédentes, caractérisé en ce que lesdits signaux de départ (104) et d'arrêt (100) sont générés en réponse au mouvement de moyens de transport (60, 62, 64) conçus pour déplacer un document vers une imprimante (12) de caractères, et en ce que ledit signal de commande a pour effet de commander l'actionnement d'un marteau (58) d'impression dans ladite imprimante (12), de manière que lesdits caractères soient imprimés à un espacement de caractères sensiblement constant.

FIG. 1

FIG. 2

FIG. 3

## FIG. 4

SHAFT ENCODER 68

## FIG. 5

HAMMER PULSE

## FIG. 6

HAMMER
MOTION

IMPACT

FIG. 7

0 139 538